# EUROPEAN PATENT SPECIFICATION

(11) **EP 4 360 908 B1**
(45) Date of publication and mention of the grant of the patent: **14.10.2026**
(21) Application number: 22828013.7
(22) Date of filing: 28.03.2022
(51) Int. Cl.: B60C 9/18, B60C 5/00, B60C 9/22, B60C 11/03, B60C 9/20, B60C 11/04

(54) **TIRE**
REIFEN
PNEUMATIQUE

(30) Priority: 21.06.2021 JP 2021102395
(43) Date of publication of application: 01.05.2024
(73) Proprietor: BRIDGESTONE CORPORATION, Chuo-ku Tokyo 104-8340 (JP)
(72) Inventor: MATSUNAGA, Ietomo, Tokyo 104-8340 (JP); KUWAYAMA, Isao, Tokyo 104-8340 (JP)
(74) Representative: Marks & Clerk LLP
(86) International application number: PCT/JP2022/014788
(87) International publication number: WO 2022/270094

(56) References cited:
- WO-A1-2014/162607
- JP-A- 2008 279 820
- JP-A- 2009 061 842
- JP-A- 2010 120 437
- JP-A- 2010 120 438
- JP-A- 2010 143 505
- JP-A- 2015 202 781
- JP-A- 2016 120 831
- JP-A- 2019 001 420
- JP-A- H05 178 015
- JP-A- H07 156 612
- KR-A- 20140 018 582
- US-A- 5 975 176
- US-A1- 2009 032 156
- US-A1- 2018 186 189

## Description

### [Technical Field]

The present invention relates to a tire having an asymmetrical pattern of tread based on tire equatorial line.

### Background of the invention

Conventionally, an asymmetrical pattern based on tire equatorial line has been widely adopted for a pneumatic tire (hereinafter omitted as appropriate from tires) mounted on a vehicle such as a four-wheel vehicle, for example, for the purpose of vehicle dynamics and noise control (For example, JP 2014-159244).

In a tire having a tread of such an asymmetrical pattern, the volume of the groove formed on outside (OUT) when mounted to the vehicle with respect to tire equatorial line (so-called negative ratio) differs from the volume of the groove formed on inside (IN) when mounted to the vehicle.

Known tires are disclosed in the documents JP H05-178015 A,KR 2014-0018582 A and US 2018/186189 A.

### [Summary of Invention]

When the negative ratio of inside (IN side) when mounted to the vehicle as described above is low, especially when the tread rigidity is high due to a pattern or a type of rubber, when accelerating or decelerating (braking) in a straight-forward state, the ground contact pressure of the tread on the IN side is released in combination with the negative camber of the vehicle, resulting in a phenomenon that longitudinal force (Fx) tends to be lowered. As a result, the braking and driving performance can be deteriorated.

Therefore, the following disclosure is made in view of such a situation, and it is an object of the present invention to provide a tire which can effectively suppress grounding pressure relief during acceleration or deceleration in a straight-forward state even when an asymmetric pattern with a low negative ratio of inside (IN side) when the vehicle mounted to the vehicle is adopted.

The present invention provides a tire according to claim 1.

### [Brief Description of Drawings]

[FIG. 1] FIG. 1 is a cross-sectional view of a pneumatic tire 10 along a tire width direction and along a tire radial direction.
[FIG. 2] FIG. 2 is a partial plan view of a tread of the pneumatic tire 10.
[FIG. 3] FIG. 3 is a partially exploded plan view of the inside of a tread 40 of the pneumatic tire 10.
[FIG. 4] FIG. 4 is a schematic view showing a cross-sectional shape of the pneumatic tire 10 mounted on a four-wheel vehicle to which negative camber is applied.

### [Modes for Carrying out the Invention]

Hereinafter, the embodiment will be described based on the drawings. The same functions and structures are denoted by the same or similar reference numerals, and the description thereof will be omitted accordingly.

### (1)Overall schematic structure of tire

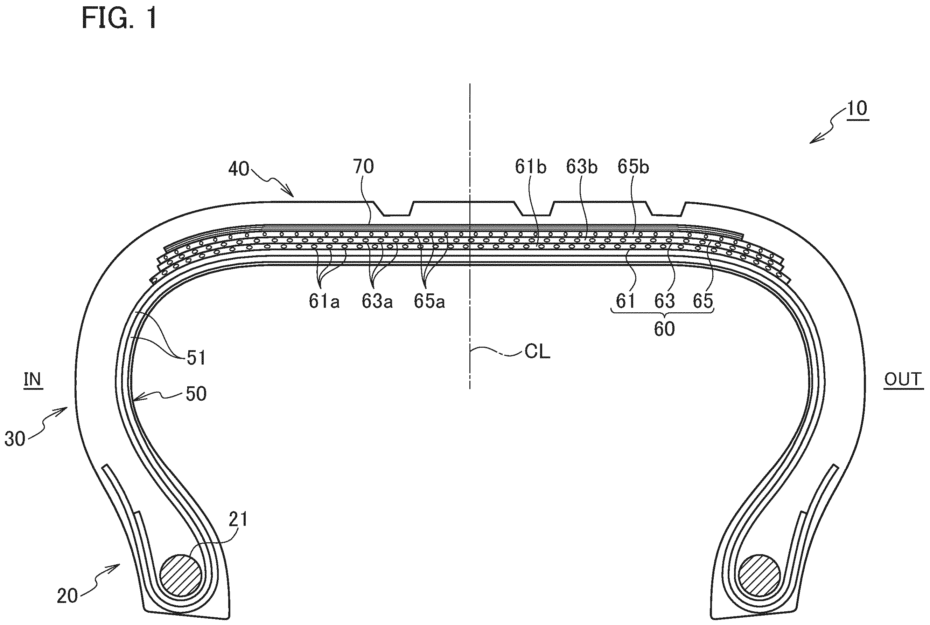

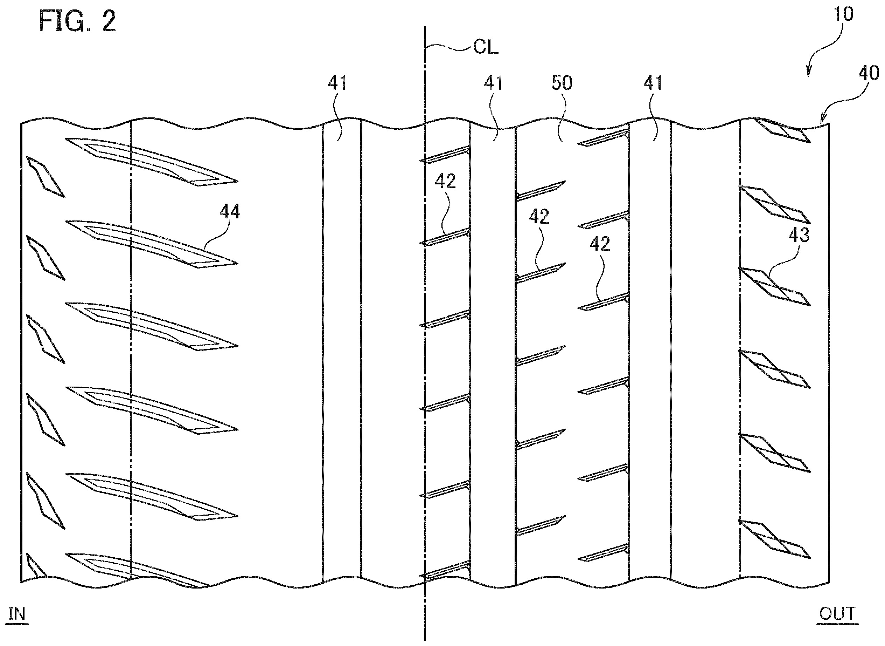

FIG. 1 is a cross-sectional view of a pneumatic tire 10 according to the present embodiment. Specifically, FIG. 1 is a cross-sectional view of the pneumatic tire 10 along a tire width direction and a tire radial direction. In FIG. 1, the cross-sectional hatching is partially omitted (hereinafter the same). FIG. 2 is a partial plan view of a tread of the pneumatic tire 10.

In this embodiment, the pneumatic tire 10 is mainly used for a four-wheel vehicle (vehicle) such as a standard passenger car. The four-wheeled vehicle may also include a light motor vehicle, an SUV (Sport Utility Vehicle), or a sports car suitable for sport driving.

The pneumatic tire 10 includes a bead portion 20, a sidewall part 30, and a tread 40. The pneumatic tire 10 includes a carcass 50 and a belt layer 60 in tire radial direction inside of the tread 40. Further, the pneumatic tire 10 includes a reinforcing belt 70 between the tread 40 (tread rubber) and the belt layer 60.

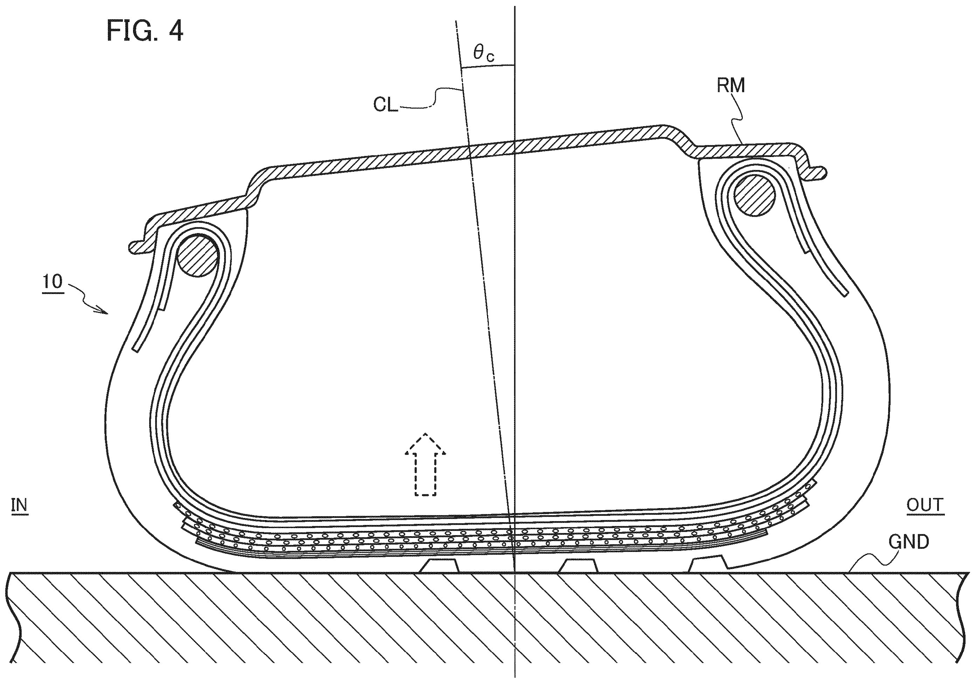

The bead portion 20 is locked by a rim wheel RM (Not shown in FIGs. 1, 2, see FIG. 4) and is annular along a tire circumferential direction. The bead portion 20 has a bead core 21 which is a bundle of metal (such as steel) or organic fiber cords. The tire radial direction outside of the bead core 21 may be provided with a bead filler (Not shown, may be called stiffener) formed of rubber (or non-rubber (For example, resin) having higher rigidity than the peripheral rubber.

The sidewall portion 30 is continued to the bead portion 20 and is located in tire radial direction inside of the bead portion 20. The sidewall portion 30 is a region from the outside end in the tire width direction of the bead portion 20 to the upper end of the belt layer 60. The sidewall portion 30 is sometimes called a sidewall or the like.

The tread 40 is a portion in contact with the road surface GND (Not shown in FIGs. 1, 2, see FIG. 4). A pattern (tread pattern) is formed on the tread 40 of the pneumatic tire 10 in consideration of various performances required for the pneumatic tire 10, specifically, high-speed durability, vehicle dynamics (cornering performance, steering stability, braking performance, etc.), drainage performance, wear resistance, rolling resistance (RR), and quietness (tire noise).

Outside (OUT) and inside (IN) of the pneumatic tire 10 are designated when the pneumatic tire 10 is mounted to the vehicle. The OUT side is located in outside which is visible from the side of the vehicle when mounted to the vehicle, and the IN side is located in inside which is not visible from the side of the vehicle when mounted to the vehicle. In the following description, the outside (OUT) or the inside (IN) will be described as appropriate.

As shown in FIG. 2, a groove portion is formed in the tread 40 by several groove elements. Specifically, a plurality of circumferential grooves 41, width direction sipes 42, and shoulder grooves 43 may be formed on the tread 40, respectively.

The circumferential grooves 41 are straight main grooves extending along the tire circumferential direction. Two circumferential grooves 41 are formed on the OUT side and one circumferential groove 41 is formed on the IN side based on the tire equatorial line CL. As described above, the grooves formed on inside (IN) when mounted to the vehicle may include at least one circumferential groove 41.

Although the width and depth of the circumferential groove 41 are not particularly limited, for example, the depth may be about 4.5 mm to 7 mm, and the width may be substantially the same as the depth, or may be slightly wider (or narrower) than the depth.

The groove wall portion of the circumferential groove 41 may be inclined with respect to the tire radial direction (which may be the tire equatorial line CL). Specifically, one groove wall portion of the circumferential groove 41 is inclined so as to approach inside when mounting to the vehicle as it heads toward inside of the tire radial direction. The other groove wall portion of the circumferential groove 41 is inclined so as to approach outside when mounting to vehicle as it heads toward inside of the tire radial direction inside. That is, the groove width of the circumferential groove 41 may be narrowed as it heads from the outside of the tire radial direction to the inside of the tire radial direction.

The width direction sipes 42 are straight sipes extending in the tire width direction, and a plurality of them are formed at a fixed distance in the tire circumferential direction.

The sipes are fine grooves that close in ground contacted surface of the tread 40, and the opening width of the sipes in the non-grounding state is preferably, but not particularly limited to, 0.1 mm to 1.5 mm.

One end of the width direction sipe 42 in the tire width direction communicates with the circumferential direction groove 41. The width direction sipe 42 inclines in the tire width direction while along the tire width direction. That is, the width direction sipe 42 is not parallel to the tire width direction but inclined in the tire width direction. The inclination angle of the width direction sipe 42 in the tire width direction is 45 degrees or less, and it is preferable to be 30 degrees or less in consideration of both the rigidity of the tread 40 and the suppression of passing noise (PBN).

The shoulder grooves 43 are formed in the tread shoulder part on the IN side. In this embodiment, the shoulder groove 43 extends in the tire width direction and has a shape such that it bends at the center part.

The shoulder groove 43 may be formed outside in the tire width direction than the ground end in the tire width direction of the pneumatic tire 10 set at normal internal pressure and loaded with normal load. However, the area of inside shoulder land where the shoulder grooves 43 are formed may be grounded with the road surface GND when cornering or the like.

In Japan, the normal internal pressure is the air pressure corresponding to the maximum load capacity of JATMA (Japan Automobile Tire Manufacturers Association) YearBook, and normal load is the maximum load capacity (maximum load) corresponding to the maximum load capacity of JATMA YearBook. Moreover, ETRTO in Europe, TRA in the United States, and other tire standards in various countries correspond to it.

Lug grooves 44 are formed in the tread shoulder part on the IN side. The lug groove 44 is inclined with respect to the tire width direction while along the tire width direction. That is, the lug groove 44 is not parallel to the tire width direction but inclined with respect to the tire width direction.

The inclination angle of the lug groove 44 with respect to the tire width direction is not more than 45 degrees in the same manner as the width direction sipe 42, and it is preferable that it is not more than 30 degrees in consideration of both rigidity of outside shoulder land part and PBN suppression.

The peripheral portion of the lug groove 44 may be inclined toward inside of the tire radial direction from the tread surface side of the tread 40 (outside shoulder land portion). Such an inclination may be called a chamfer or the like.

In the pneumatic tire 10, the volume of the groove (Specifically, one circumferential groove 41 and the lug groove 44) formed on the tread 40 of inside when mounted to the vehicle based on tire equatorial line CL is smaller than the volume of the groove (Specifically, two circumferential grooves 41, the width direction sipe 42, and the shoulder groove 43) formed on the tread 40 of outside when mounted to the vehicle based on tire equatorial line CL.

The volume of the groove may be interpreted as the area (or volume) of the portion that does not contact with the road surface GND under normal internal pressure and normal load described above. On the other hand, the portion that contact with the road surface GND under normal internal pressure and normal load may be interpreted as the land portion.

The ratio of the groove portion to the land portion may be defined as the so-called negative ratio. The negative ratio may be expressed simply as the groove portion/(land portion + groove portion), but it may be interpreted precisely as the ratio of the groove portion to the overall area of the tread 40, which is a two-dimensional projection of the entire circumference (or unit length (pitch)) portion of the tread 40.

According to the invention, for the calculation of the negative ratio, only the main groove portion of the tread 40 is subjected to the groove portion, and other grooves are excluded. Specifically, in this embodiment, the circumferential groove 41 extending in the tire circumferential direction is subjected to the groove portion, and the width direction sipe 42, shoulder groove 43, and lug groove 44 extending in the tire width direction are excluded from the calculation of the negative ratio.

In addition, as described above, the ground end in the tire width direction required for the determination of the land portion may be based on the condition that the pneumatic tire 10 set to the normal internal pressure is loaded with the maximum load capacity (maximum load) corresponding to the maximum load capacity (load index (LI)).

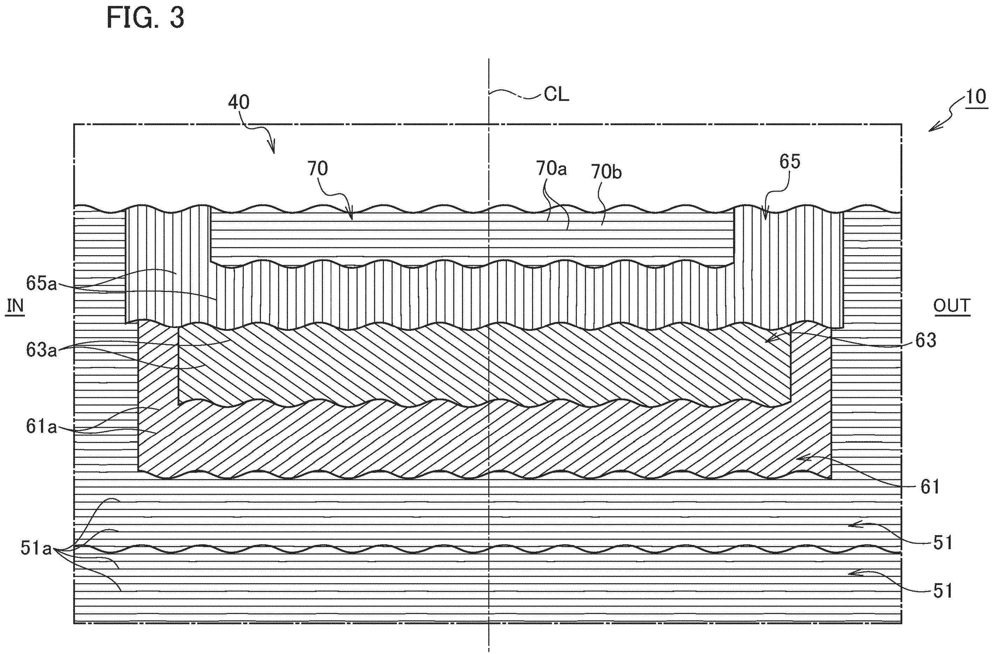

The carcass 50 forms the skeleton of the pneumatic tire 10. The carcass 50 is a radial structure in which a carcass cord 51a (Not shown in FIGs. 1, 2, see FIG. 3) radially arranged along the tire radial direction is covered with a rubber material. The carcass 50 is folded back from inside in the tire width direction to outside in the tire width direction via the bead core 21. One or more carcass 50 may be laminated.

The belt layer 60 is provided outside in tire radial direction of the carcass 50. The belt layer 60 includes an inclined belt 61, an inclined belt 63 and a spiral belt 65.

The inclined belt 61 is provided outside in tire radial direction of the carcass 50. The inclined belt 63 is provided outside in tire radial direction of the inclined belt 61. The inclined belt 61 and the inclined belt 63 each have a belt cord 61a and a belt cord 63a (see FIG. 3) crossing with each other.

In this embodiment, the inclined belt 61 and the inclined belt 63 constitute a pair of crossing belt having crossing cords.

The spiral belt 65 is provided outside of the inclined belt 63, i.e., outside in the tire radial direction of the crossing belt. The spiral belt 65 has a structure in which the belt cord 65a is wound along the tire circumferential direction. Specifically, the spiral belt 65 is constituted by winding a strip-shaped rubber member covered with the belt cord 65a along crossing belt in the tire circumferential direction.

The reinforcing belt 70 is provided between the inclined belt 63 (crossing belt) and the tread 40 (Specifically, the tread rubber forming the tread 40). In this embodiment, the reinforcing belt 70 is provided between the spiral belt 65 and the tread 40. The reinforcing belt 70 has a plurality of reinforcing cords 70a (see FIG. 3) extending along the tire width direction and along the tire radial direction.

The reinforcing cords 70a extend along the tire width direction in the tread surface view and extend along the tire radial direction (which may be called the radial direction) in the tire side view. Accordingly, the reinforcing belt 70 may be called a radial belt or the like having cords extending along the radial direction.

The reinforcing belt 70 may be interpreted as a kind of reinforcing belt that is relatively free to extend and deform in the tire circumferential direction and, conversely, difficult to extend and deform in the tire width direction. Thus, the reinforcing belt 70 may function as a component that provides anisotropy within the tread 40 (inside in the tire radial direction).

Further, since the reinforcing belt 70 is provided between the spiral belt 65 and the tread 40 and has the characteristics described above, it may be called a floating belt or the like.

The reinforcing belt 70 extends from the outside (OUT) when mounted to the vehicle to the inside (IN) when mounted to the vehicle. Specifically, the reinforcing belt 70 may be provided on the OUT side and the IN side based on tire equatorial line CL.

Further, the reinforcing belt 70 is provided at least to the ground end in the tire width direction. As described above, the ground end is based on the normal internal pressure and the normal load. The end of the reinforcing belt 70 in the tire width direction may be located on the shoulder side of the tread 40 beyond the ground end.

### (2)Structure of the inside of the tread 40

FIG. 3 is a partially exploded plan view of the inside of the tread 40 of the pneumatic tire 10. Specifically, FIG. 3 is a partially exploded plan view of the carcass 50, the belt layer 60, and the reinforcing belt 70 provided inside the tread 40 (tread rubber).

As shown in FIG. 3, in this embodiment, the carcass 50 is composed of two carcass plies 51. As described above, in this embodiment, the carcass 50 is a radial structure, but is not limited to a radial structure, and may be a bias structure in which the carcass cord 51a is arranged so as to cross the tire radial direction.

The material of the carcass cord 51a is not particularly limited, but can be formed, for example, using an organic fiber such as nylon, similar to a tire for a typical four-wheel vehicle. However, the carcass cord 51a may be made of a material such as an aromatic polyamide or steel.

The inclined belt 61 and the inclined belt 63 constituting the belt layer 60 constitute a pair of crossing belt as described above. Specifically, the belt cord 61a and the belt cord 63a are disposed inclined in the tire width direction (which may be the tire circumferential direction), and the belt cord 61a and the belt cord 63a are inclined in the opposite direction to the tire width direction so as to cross each other.

The material of the belt cord 61a and the belt cord 63a is not particularly limited, and may be composed of a material such as, for example, an aromatic polyamide or steel.

The spiral belt 65 is provided between the inclined belts 61 and 63 (crossing belt) and the reinforcing belt 70.

The spiral belt 65 is a belt in which the belt cord 65a extending substantially parallel to the tire equatorial line CL is coated with a rubber material. The belt cord 65a may be referred to as a spiral cord. The belt cord 65a may be formed of, for example, organic fiber or steel. The material of the belt cord 65a and the material of the belt cord 61a, the belt cord 63a may be the same, but in consideration of the performance required for the pneumatic tire 10, they are preferably different. Specifically, the belt cord 65a is preferably stronger than the belt cord 61a and the belt cord 63a.

The number of driving lines (which may be referred to as the placement interval or placement density) of the belt cord 65a in the tire width direction is preferably 6 cords/cm or more.

The reinforcing belt 70 extends in the tire width direction and is constituted by coating a plurality of the reinforcing cords 70a arranged at a predetermined distance with a coating rubber 70b.

The reinforcing cord 70a is preferably arranged so as to be parallel to the tire width direction, that is, the angle formed with the tire width direction is 0 degrees. However, the reinforcing cord 70a may have a slight angle (15 degrees or less) with respect to the tire width direction.

As the material of the reinforcing cord 70a, organic fibers having relatively high strength are preferably used. For example, aramid fibers, specifically Kevlar (registered trademark) and the like can be used. Nylon and the like can also be used depending on the environment in which it is used, but organic fibers (aromatic polyamides) of higher strength are preferably used.

The reinforcing cord 70a may be formed by twisting a plurality of organic fibers and the like described above, but the thickness of the reinforcing cord 70a is preferably 0.5 mm to 2.0 mm, and the Young's modulus of the reinforcing cord 70a is preferably 50 GPa or more.

The number of driving lines of the reinforcing cord 70a is preferably 20~60/50 mm.

### (3)Operational effect

Next, the operational effect of the pneumatic tire 10 according to the present embodiment will be described. As described above, in the pneumatic tire 10, the volume of the groove portion formed on the tread 40 of the inside (IN) when mounted to the vehicle based on the tire equatorial line CL is smaller than the volume of the groove portion formed in the tread 40 of the outside (OUT) when mounted to the vehicle based on the tire equatorial line CL. That is, in the pneumatic tire 10, the negative ratio of the IN side is lower than that of the OUT side.

As described above, for the purpose of vehicle dynamics and noise control, an asymmetric pattern is widely adopted for the pneumatic tire mounted on a vehicle such as a four-wheel vehicle. However, in the case of an asymmetric pattern with a negative ratio on the IN side < a negative ratio on the OUT side, such as the pneumatic tire 10, there are the following disadvantages.

Specifically, in the case of a four-wheel vehicle such as a standard passenger car, negative camber is generally provided, and in the straight-forward state, the grounding pressure on the IN side tends to be higher than that on the OUT side.

FIG. 4 schematically shows a cross-sectional shape of the pneumatic tire 10 mounted on a four-wheel vehicle to which negative camber is applied.

As shown in FIG. 4, when negative camber (θc in FIG. 4) is applied and the negative ratio on the IN side is low, acceleration or deceleration (braking) in a straight-forward state temporarily increases the load applied to the pneumatic tire 10, and the ground end in the tire width direction widens to the IN side.

In such a state, especially for the tread 40 on the IN side with high rigidity and low negative ratio, the in-plane contraction force acts toward the center in the tire width direction due to the ground contact with the road surface GND, and the tread rubber undergoes deformation called wiping deformation along the tire width direction.

The wiping deformation also causes contraction of the belt layer 60 and the like (including the spiral belt 65), which contributes to the flow of the tread rubber. Therefore, on the IN side, where the negative ratio is low, the escape area of the flowing tread rubber is limited, and the belt layer 60 likely to be pushed up (may be called buckling), that is, the tread 40 is deformed to inside of the tire radial direction inside (see the dotted arrow in the figure. As a result, during acceleration and deceleration, the grounding pressure on the IN side decreases, and lateral force (Fy) is lost, and longitudinal force (Fx) also decreases.

In the pneumatic tire 10, the reinforcing belt 70 in which the reinforcing cord 70a arranged along the tire width direction is covered with the coating rubber 70b is provided on inside in the tire radial direction of the tread 40. That is, since the reinforcing belt 70 is provided only with a cord arranged along the tire width direction (and tire radial direction), it is relatively free to extend and deform in the tire circumferential direction, and conversely, it has a characteristic that it is difficult to deform in the tire width direction.

The reinforcing belt 70 functions as a buffer layer between the belt layer 60 (and the spiral belt 65) having high rigidity and the tread 40, and the above-mentioned wiping deformation can be reduced. Specifically, since the wiping deformation, which contributes to the flow of the tread rubber, is absorbed by the reinforcing belt 70, the push up (floating) of the belt layer 60 in the vicinity of the circumferential groove 41 on the OUT side can also be suppressed.

Further, the reinforcing belt 70 can disperse the tension in the tire circumferential direction to the tension in the tire width direction, and the rigidity of the belt layer 60 (and the spiral belt 65) can be reduced reasonably well, thereby suppressing the loss of ground pressure due to the wiping deformation.

In this way, the pneumatic tire 10 can effectively suppress the loss of grounding pressure when accelerating or decelerating in a straight-forward state, even when the negative ratio of inside (IN) when mounted to the vehicle is low, and especially when the rigidity of the tread 40 is increased due to a pattern or a type of rubber. Thus, the deterioration of longitudinal force can be suppressed, and the braking and driving performance can be improved.

In this embodiment, the spiral belt 65 having the belt cord 65a wound along the tire circumferential direction is provided between the inclined belts 61 and 63 (crossing belt) and the reinforcing belt 70. Therefore, while functioning as a hoop in the tire circumferential direction, the spiral belt can contribute to the ground pressure relief suppression by the reinforcing belt 70.

Further, the reinforcing belt 70 may be provided at least to the ground end in the tire width direction. Thus, in turning, ground pressure relief of the tread 40 on the OUT side with a low negative ratio can be suppressed more effectively.

In the present embodiment, the groove portion formed on the IN side may include at least one circumferential groove 41. That is, a straight groove extending in the tire circumferential direction which can be a main groove may be formed on the IN side where the negative ratio is high. Even in the case of such a tread pattern which extends in the tire circumferential direction with a relatively wide groove width and is unfavorable for deformation suppression, ground pressure relief near the circumferential groove 41 can be effectively suppressed.

In addition, in the present embodiment, one groove wall portion of the circumferential groove 41 is inclined to approach inside when mounted to the vehicle toward inside in the tire radial direction, and the other groove wall portion of the circumferential groove 41 is inclined to approach outside when mounted to the vehicle toward inside in the tire radial direction. Therefore, even a negative camber is provided and when acceleration/deceleration in the straight-forward state, it acts in a direction to suppress deformation of the tread 40 toward the tire radial direction inside in the vicinity of the circumferential groove 41. Therefore, lowering of the ground pressure of the tread 40 of the inside (IN) when mounted to the vehicle can be suppressed more effectively.

When the wet performance (drainage performance) is emphasized, the groove wall portion of the circumferential groove 41 may be parallel to the tire radial direction without being inclined.

In the present embodiment, the peripheral edge portion of the lug groove 44 may be formed with a chamfer portion inclined from the tread surface of the tread 40 (outside shoulder land portion) toward inside in the tire radial direction. The formation of such a chamfer is effective for improving wet performance and suppressing uneven wear near the lug groove 44.

### (4)Other Embodiments

Although the embodiments have been described above, they are not limited to the description of the embodiments, and it is obvious to those skilled in the art that various modifications and improvements can be made.

For example, in the embodiments described above, the spiral belt 65 was provided, but the spiral belt 65 is not required. That is, depending on the use of the pneumatic tire 10, the reinforcing belt 70 may be provided outside in the tire radial direction of the crossing belt (inclined belts 61, 63), and the tread 40 (tread rubber) may be provided outside in the tire radial direction of the reinforcing belt 70.

In addition to the spiral belt 65, another reinforcing belt may be provided, for example, a belt (may be called a cap layer, etc.) that covers the tire width direction end of the crossing belt.

In this embodiment, the reinforcing belt 70 is provided to the vicinity of the ground end of outside (OUT) when mounted to the vehicle and inside (IN) when mounted to the vehicle, but the width of the reinforcing belt 70 may be slightly narrower if it is provided on the OUT side and the IN side based on the tire equatorial line CL. Furthermore, the width of the reinforcing belt 70 is asymmetric based on the tire equatorial line CL. That is, the outside end in the tire radial direction on either the OUT side or the IN side may be located more outside in the tire width direction than another outside end in the tire radial direction.

In the present embodiment, a plurality of straight circumferential grooves 41 are formed on the tread 40, but the circumferential grooves 41 are not necessarily straight and may meander or bend slightly along the tire circumferential direction.

Although the present disclosure has been described in detail above, it is clear to those skilled in the art that the present disclosure is not limited to the embodiments described herein. The present disclosure may be implemented in a modified and modified manner without departing from the object and scope of the present disclosure as determined by the description of the scope of claims. Accordingly, the description of the present disclosure is for illustrative purposes and does not have any restrictive meaning to the present disclosure.

### [Explanation of Reference Numerals]

10 pneumatic tire
20 bead portion
21 bead core
30 sidewall portion
40 tread
41 circumferential groove
42 width direction sipe
43 shoulder groove
44 lug Groove
50 carcass
51 carcass ply
51a carcass cord
60 belt layer
61 inclined belt
61a belt cord
63 inclined belt
63a belt cord
65 spiral belt
65a belt cord
70 reinforcing belt
70a reinforcing cord
70b coating rubber

## Claims

1. A tire (10) comprising a tread (40) that is adapted to be in contact with a road surface and a pair of crossing belt (61, 63), of which cords (61a, 63a) are crossed,
wherein a volume of circumferential grooves (41) formed on an inside of the tread (40) based on a tire equatorial line (CL) when the tire (10) is mounted to a vehicle is less than a volume of circumferential grooves (41) formed in an outside of the tread (40) based on the tire equatorial line (CL) when the tire (10) is mounted to the vehicle,
wherein the tire (10) further comprises a reinforcing belt (70) between one of the crossing belts (63) and the tread (40),
**characterised in that**
a width of the reinforcing belt (70) extends asymmetrically based on the tire equatorial line (CL) when the tire (10) is mounted to the vehicle,
wherein the reinforcing belt (70) is constituted by coating a plurality of reinforcing cords (70a), and
wherein the reinforcing cords (70a) extend along a tire width direction and along a tire radial direction and are arranged at a predetermined distance, wherein the reinforcing cords (70a) have an angle of 15 degrees or less with respect to the tire width direction, wherein
the reinforcing belt (70) is provided from the outside to the inside when the tire (10) is mounted to the vehicle.

2. The tire (10) according to claim 1, wherein a spiral belt (65) with cords wound in the tire circumferential direction is provided between the crossing belt (63) and the reinforcing belt (70).

3. The tire (10) according to claim 1 or 2, wherein the reinforcing belt (70) is provided at least up to a ground end in the tire width direction, wherein the ground end is a location on the tire (10) formed when a normal internal pressure is applied to the tire (10) and a normal load is loaded to the tire (10).

## Patentansprüche

1. Reifen (10), umfassend eine Lauffläche (40), die angepasst ist, um mit einer Fahrbahnoberfläche in Kontakt zu stehen, und ein Paar sich kreuzender Gürtel (61, 63), deren Corde (61a, 63a) gekreuzt sind,
wobei ein Volumen von Umfangsrillen (41), die an einer Innenseite der Lauffläche (40) basierend auf der Reifenäquatoriallinie (CL) gebildet wird, wenn der Reifen (10) an einem Fahrzeug montiert ist, kleiner ist als ein Volumen von Umfangsrillen (41), die an einer Außenseite der Lauffläche (40) basierend auf der Reifenäquatoriallinie (CL) gebildet wird, wenn der Reifen (10) am Fahrzeug montiert ist,
wobei der Reifen (10) weiter einen Verstärkungsgürtel (70) zwischen einem der sich kreuzenden Gürtel (63) und der Lauffläche (40) umfasst,
**dadurch gekennzeichnet, dass**
sich eine Breite des Verstärkungsgürtels (70) asymmetrisch basierend auf der Reifenäquatoriallinie (CL) erstreckt, wenn der Reifen (10) am Fahrzeug montiert ist,
wobei der Verstärkungsgürtel (70) durch Ummanteln einer Vielzahl von Verstärkungscorden (70a) aufgebaut wird, und
wobei sich die Verstärkungscorde (70a) in Reifenbreitenrichtung und entlang radialer Reifenrichtung erstrecken und in einem vorbestimmten Abstand angeordnet sind, wobei die Verstärkungscorde (70a) einen Winkel von 15 Grad oder weniger in Bezug zur Reifenbreitenrichtung aufweisen, wobei
der Verstärkungsgürtel (70) von außen nach innen bereitgestellt wird, wenn der Reifen (10) am Fahrzeug montiert ist.

2. Reifen (10) nach Anspruch 1, wobei zwischen dem Kreuzgürtel (63) und dem Verstärkungsgürtel (70) ein spiralförmiger Gürtel (65) mit in Umfangsrichtung des Reifens gewickelten Corden bereitgestellt ist.

3. Reifen (10) nach Anspruch 1 oder 2, wobei der Verstärkungsgürtel (70) mindestens bis zu einem geschliffenen Ende in der Reifenbreitenrichtung bereitgestellt ist, wobei das geschliffene Ende eine Stelle am Reifen (10) ist, die sich bildet, wenn ein normaler Innendruck auf den Reifen (10) ausgeübt, und eine normale Last auf den Reifen (10) aufgebracht wird.

## Revendications

1. Pneu (10) comprenant une bande de roulement (40) adaptée pour être en contact avec une surface de la route et une paire de ceintures croisées (61, 63), dont les câblés (61a, 63a) sont croisés,
dans lequel un volume de rainures circonférentielles (41) formées à l'intérieur de la bande de roulement (40) sur la base d'une ligne équatoriale du pneu (CL) lorsque le pneu (10) est monté sur un véhicule est inférieur à un volume de rainures circonférentielles (41) formées à l'extérieur de la bande de roulement (40) sur la base de la ligne équatoriale du pneu (CL) lorsque le pneu (10) est monté sur le véhicule,
dans lequel le pneu (10) comprend en outre une ceinture de renfort (70) entre l'une des ceintures croisées (63) et la bande de roulement (40),
**caractérisé en ce que**
la largeur de la ceinture de renfort (70) s'étend de manière asymétrique en fonction de la ligne équatoriale du pneu (CL) lorsque le pneu (10) est monté sur le véhicule,
dans lequel la ceinture de renfort (70) est constituée par le revêtement d'une pluralité de câblés de renfort (70a), et
dans lequel les câblés de renfort (70a) s'étendent dans le sens de la largeur du pneu et dans le sens radial du pneu et sont agencés à une distance prédéterminée, dans lequel les câblés de renfort (70a) présentent un angle de 15 degrés ou moins par rapport au sens de la largeur du pneu, dans lequel
la ceinture de renfort (70) est ménagée de l'extérieur vers l'intérieur lorsque le pneu (10) est monté sur le véhicule.

2. Pneu (10) selon la revendication 1, dans lequel une ceinture en spirale (65) avec des câblés enroulés dans le sens circonférentiel du pneu est prévue entre la ceinture croisée (63) et la ceinture de renfort (70).

3. Pneu (10) selon la revendication 1 ou 2, dans lequel la ceinture de renfort (70) est ménagée au moins jusqu'à une extrémité rectifiée dans le sens de la largeur du pneu, dans lequel l'extrémité rectifiée est un emplacement sur le pneu (10) formé lorsqu'une pression interne normale est appliquée au pneu (10) et qu'une charge normale est appliquée au pneu (10).
